# EUROPEAN PATENT SPECIFICATION

(11) **EP 4 022 697 B1**
(45) Date of publication and mention of the grant of the patent: **30.04.2025**
(21) Application number: 20758250.3
(22) Date of filing: 26.08.2020
(51) Int. Cl.: H01M 4/131, H01M 4/36, H01M 4/48, H01M 4/505, H01M 4/525, H01M 10/0525

(54) **MIXED LITHIUM TRANSITION METAL OXIDE COATED WITH PYROGENICALLY PRODUCED ZIRCONIUM-CONTAINING OXIDES**
MIT PYROGEN HERGESTELLTEN, ZIRKONIUMHALTIGEN OXIDEN BESCHICHTETES GEMISCHTES LITHIUMÜBERGANGSMETALLOXID
OXYDE MIXTE DE LITHIUM ET DE MÉTAL DE TRANSITION REVÊTU D'OXYDES CONTENANT DU ZIRCONIUM PRODUITS PAR PYROGÉNIE

(30) Priority: 27.08.2019 EP 19193755
(43) Date of publication of application: 06.07.2022
(73) Proprietor: Evonik Operations GmbH, 45128 Essen (DE)
(72) Inventor: ESKEN, Daniel, 63526 Erlensee (DE); HERZOG, Marcel, 63791 Karlstein (DE)
(74) Representative: Evonik Patent Association
(86) International application number: PCT/EP2020/073832
(87) International publication number: WO 2021/037900

(56) References cited:
- WO-A1-2012/022618
- WO-A1-2016/116862
- GEORGE TING-KUO FEY ET AL: "Zirconia-coated lithium cobalt oxide as a long-cycling cathode for lithium batteries", JOURNAL OF THE CHINESE INSTITUTE OF ENGINEERS - ZHONGGUO GONGCHENG XUEKAN, vol. 28, no. 7, 1 October 2005 (2005-10-01), GB, pages 1139 - 1151, XP055666495, ISSN: 0253-3839, DOI: 10.1080/02533839.2005.9671090
- JIANG DU ET AL: "Effects of ZrO2 Coating on LiNi1/3Mn1/3Co1/3O2 Particle with Microwave Pyrolysis", JOURNAL OF MATERIALS ENGINEERING AND PERFORMANCE., vol. 23, no. 6, 1 June 2014 (2014-06-01), US, pages 2159 - 2163, XP055666492, ISSN: 1059-9495, DOI: 10.1007/s11665-014-1005-9

## Description

The disclosure relates to a process for producing coated mixed lithium transition metal oxide, coated mixed lithium transition metal oxide obtainable by this process, cathode for a lithium battery and lithium battery comprising such coated metal oxides.

Various energy storage technologies have recently attracted much attention of public and have been a subject of intensive research and development at the industry and in the academia. As energy storage technologies are extended to devices such as cellular phones, camcorders and notebook PCs, and further to electric vehicles, demand for high energy density batteries used as a source of power supply of such devices is increasing. Secondary lithium batteries are one of the most important battery types currently used.

The secondary lithium batteries are usually composed of an anode made of a carbon material or a lithium-metal alloy, a cathode made of a lithium-metal oxide, and an electrolyte in which a lithium salt is dissolved in an organic solvent. The separator of the lithium battery provides the passage of lithium ions between the positive and the negative electrode during the charging and the discharging processes.

One of the general problems with cathode materials is their rapid aging and thus the loss of performance during cycling. This phenomenon is especially relevant for nickel manganese cobalt mixed oxides (NMC) with a high nickel content. The deactivation of the positive electrode material occurs by several electrochemical degradation mechanisms. Surface transformations such as the formation of a NiO-like phase due to the reduction of Ni⁴⁺ in a highly delithiated state and oxygen loss as well as transition metal rearrangement destabilizes the crystal structure. This phase transitions have been associated with the initiate cracks appearing at the cathode particle surface and subsequent particle disintegration. In addition, the electrolyte decomposes at the reactive surface of NMC and the electrolyte decomposition products deposit at the interface of cathode material, which leads to an increased resistance. Furthermore, the conducting salt LiPF₆, which is commonly used in liquid electrolytes reacts with the trace amounts of H₂O present in all commercial formulations to form HF. This highly reactive compound causes lattice distortion in the cathode material by dissolution of transition metal ions out of the surface of the cathode material into the electrolyte. All these degradation mechanisms result in a decrease of capacity, performance and cycle life.

It is known that coating of mixed lithium transition metal oxide particles with some metal oxides can inhibit unwanted reactions of the electrolyte with the electrode materials and thus improve the long-life stability of the lithium batteries.

WO00/70694 discloses mixed transition metal oxide particles coated with oxides or mixed oxides of Zr, Al, Zn, Y, Ce, Sn, Ca, Si, Sr, Mg and Ti. They are obtained by suspending the uncoated particles in an organic solvent, admixing the suspension with a solution of a hydrolysable metal compound and a hydrolysis solution, and then filtering off, drying and calcining the coated particles.

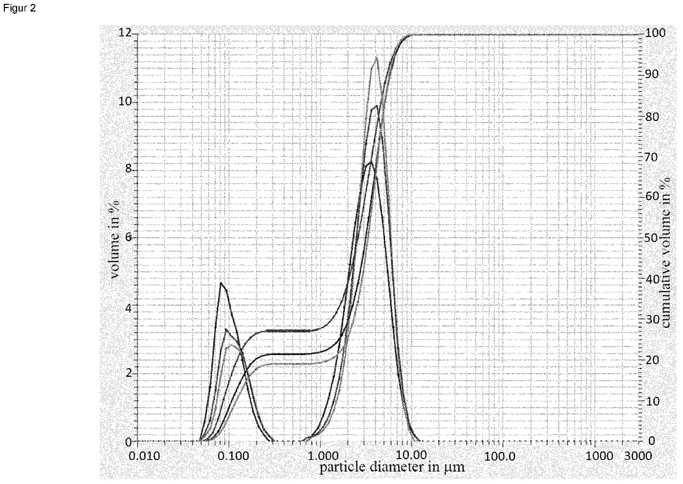

US 2015/0340689 A1 discloses cathode active materials (CAM) for a lithium battery comprising a core of transition metal oxide and a coating layer including zirconium dioxide. Such coated CAMs are typically prepared by mixing a transition metal precursor with zirconium (IV) oxynitrate having an average particle size of less than 1 µm and calcining the thus obtained mixture at 700 °C to form a CAM coated with ZrO₂. An alternative embodiment (example 5) shows mixing of the transition metal precursor with zirconium (IV) dioxide having an average particle diameter of less than 1 µm supplied by Aldrich Co and calcining the resulting coated CAM at 700 °C. The analysis of these materials by SEM microscopy shows that the average particle size of ZrO₂ particles present in the coating is about 400 nm (Figure 2, analysis example 1).

US 2016/0204414 A1 describes CAMs for batteries including non-aqueous electrolytes, comprising a transition metal oxide core, wherein a zirconium compound is present on the surface of this core. The examples show the use of zirconium dioxide with an average particle size of 1 µm for coating of CAMs.

CN 105161710 A discloses CAMs comprising a transition metal mixed oxide core and a coating layer containing alumina or zirconia with a particle size of 5-100 nm. Thus, in example 4, a precursor of formula LiNi_{0.5}Co_{0.2}Mn_{0.3}Mg_{0.02}O₂ with a particle size of 3 µm was mixed by ball milling with ZrO₂ having a particle size of 20 nm. The resulting coated CAM was calcined at 580 °C.

JP 2013235666 A describes CAMs comprising a transition-metal oxide core and a layer containing ZrO₂-particles, having a predominantly monoclinic crystal structure. Thus, in example 1, LiNi_{1/3}Co_{1/3}Mn_{1/3}O₂ particles with a mean particle size of D₅₀ = 10 µm are mixed with ZrO₂ particles with a mean particle size of D₅₀ = 27 nm at a rotation speed of 4000 rpm and then calcined at 800 °C.

Although the last two documents refer to nanostructured ZrO₂ particles with mean particle size of 20-30 nm, no further details, such as to the preparation method or source of such particles are provided. Most probably, the given mean particle sizes relate to the primary particles of ZrO₂. Such small primary particles are normally aggregated and agglomerated to form much larger particles in µm range.

In Journal of the Chinese Institute of Engineers, Vol. 28, No. 7, pp 1139-1151 (2005) it is disclosed that LiCoO₂ powder can be coated with ZrO₂ having average particle size of 500-600 nm, prepared by spray pyrolysis using a sol-gel or mechano-thermal processes. In the latter process, LiCoO₂ powder is sonicated for 30 minutes with a dispersion of ZrO₂ in ethanol, followed by a slow evaporation of the solvent at 50 °C and calcination at 450 °C for 10 h.

Also, some mixed metal oxides comprising zirconium have been reported for use in lithium batteries.

US2017179544A discloses preparation of lithium positive electrode materials doped with mixed metal oxides based on zirconium. Thus, in example 1 Li₇La₃Zr₂Al_{0.07}O_{12.0105} was prepared by mixing the metal salts and sintering the mixture at 1200 °C for 10 hours, followed by dry mixing with a mixed lithium transition metal oxide Li(Li_{10/75}Ni_{18/75}Co_{9/75}Mn_{38/75})O₂ and subsequent heating at 900 °C for 20 hours to form a lithium positive electrode material. It is evident from this preparation procedure, that only large sized sintered particles of Li₇La₂Zr₂Al_{0.07}O_{12.0105} could be used in this example.

The coating of cathode materials of lithium batteries with metal oxides, such as Al₂O₃, TiO₂ and ZrO₂ for improving their cycling performance, is known. However, the practical ways to improve the batteries long life are often limited. Thus, in the case of zirconium dioxide, the use of commercially available nano-sized ZrO₂ particles often leads to inhomogeneous distribution and large agglomerated ZrO₂ particles on the surface of core cathode material (see e.g. Figure 2 for such an example) and as a result, minimal or no improvements in cycling performance are observed when compared with non-coated cathode materials.

The problem addressed by the present disclosure is that of providing modified mixed lithium transition metal oxide as a cathode material, especially of high nickel NMC type, for use in the lithium batteries. Such modified cathode materials should provide a higher cycling stability than that of the unmodified materials.

In the course of thorough experimentation, it was surprisingly found that pyrogenically produced zirconium dioxide or pyrogenically produced mixed oxides comprising zirconium may successfully be used for coating of mixed lithium transition metal oxides, which are applicable as cathodes for the lithium batteries.

The disclosure provides a process for producing a coated mixed lithium transition metal oxide, wherein a mixed lithium transition metal oxide and a pyrogenically produced zirconium dioxide and/or a pyrogenically produced mixed oxide comprising zirconium are subjected to dry mixing by means of an electric mixing unit having a specific electrical power of 0.05-1.5 kW per kg of the mixed lithium transition metal oxide.

The term "electric mixing unit" relates in the context of the present invention to any mixing device operated by supply of electric energy.

Electrical power is the rate, per unit time, at which electrical energy is transferred by an electric circuit. The term "specific electrical power" relates in the context of the present invention to the electrical power, supplied by the electrical mixing unit during the mixing process, per kg of the mixed lithium transition metal oxide.

Dry mixing is understood to mean that no liquid is added or used during the mixing process, that is e.g., substantially dry powders are mixed together. However, it is possible that there are trace amounts of moisture or some other than water liquids present in the mixed feedstocks or that these include crystallization water. Preferably, the mixture of the mixed lithium transition metal oxide and the pyrogenically produced zirconium dioxide and/or a pyrogenically produced mixed oxide comprising zirconium contains less than 5 % by weight, more preferably less than 3% by weight, more preferably less than 1% by weight water and/or other liquids.

Dry mixing process of the present disclosure has some benefits over a mixing process involving wet coating, e.g. coating with a dispersion containing metal oxides. Such a wet coating process inevitably involves the use of solvents, which must be evaporated after the coating process is completed. Thus, the dry coating process of the disclosure is simpler and more economical than the wet coating processes known from the prior art. On the other hand, it was surprisingly found that the dry coating process of the invention also provides a better distribution of the metal oxide particles containing zirconium on the surface of the mixed lithium transition metal oxide.

If the used specific electrical power is less than 0.05 kW per kg of the mixed lithium transition metal oxide, this gives an inhomogeneous distribution of the zirconium dioxide or the mixed oxide comprising zirconium, which may be not firmly bonded to the core material of the lithium transition metal oxide.

A specific electrical power of more than 1.5 kW per kg of the mixed lithium transition metal oxide leads to poorer electrochemical properties. In addition, there is the risk that the coating will become brittle and prone to fracture.

The nominal electrical power of the mixing unit can vary in a wide range, e.g. from 0.1 kW to 1000 kW. Thus, it is possible to use mixing units on the laboratory scale with a nominal power of 0.1-5 kW or mixing units for the production scale with a nominal electrical power of 10-1000 kW. The nominal electrical power is the nameplate, maximal absolute electrical power of the mixing unit.

It is likewise possible to vary the volume of the mixing unit in a wide range, e.g. from 0.1 L to 2.5 m³. Thus, it is possible to use mixing units on the laboratory scale with a volume of 0.1-10 L or mixing units for the production scale with a volume of 0.1-2.5 m³.

The term "volume of the mixing unit" refers in the context of the present invention to the maximal volume of the chamber of the electric mixing unit where the substances to be mixed can be placed.

Preferably, in the process according to the disclosure forced mixers are used in the form of intensive mixers with high-speed mixing tools. It has been found that a speed of the mixing tool of 5-30 m/s, more preferably of 10-25 m/s, gives the best results. The term "mixing tool" refer in the context of the present disclosure to any object in the mixing unit, which can be moved, e.g. rotated, shaken etc, and thus mix the contents of the mixing unit. The examples of such mixing tools are stirrer of various form. Commercially available mixing units well suitable for the process of the disclosure are, for example, Henschel mixers or Eirich mixers.

The mixing time is preferably 0.1 to 120 minutes, more preferably 0.2 to 60 minutes, very preferably 0.5 to 10 minutes.

The mixing may be followed by a thermal treatment of the mixture. Such a treatment may improve the binding of the coating to the mixed lithium transition metal oxide particles. However, this treatment is not necessary in the process according to the disclosure since in this process, the pyrogenically produced zirconium dioxide or the mixed oxide comprising zirconium adhere with sufficient firmness to the mixed lithium transition metal oxide. A preferred embodiment of the process according to the invention therefore does not comprise any thermal treatment after the mixing.

It has been found that the best results regarding the adhesion of the zirconium oxides to the mixed lithium transition metal oxide are obtained when the zirconium dioxide and the mixed oxide comprising zirconium have a BET surface area of 5 m²/g - 200 m²/g, more preferably of 10 m²/g - 150 m²/g and most preferably of 15-100 m²/g. The BET surface area can be determined according to DIN 9277:2014 by nitrogen adsorption according to Brunauer-Emmett-Teller procedure.

The zirconium dioxide and the mixed oxide comprising zirconium used in the process according to the disclosure are produced pyrogenically, that means by pyrogenic methods, also known as "fumed" methods.

Such "pyrogenic" or "fumed" processes involv the reaction of the corresponding metal precursors in a flame hydrolysis or a flame oxidation in an oxyhydrogen flame to form metal oxides. This reaction initially forms highly disperse approximately spherical primary metal oxide particles, which in the further course of the reaction coalesce to form aggregates. The aggregates can then accumulate into agglomerates. In contrast to the agglomerates, which as a rule can be separated into the aggregates relatively easily by introduction of energy, the aggregates are broken down further, if at all, only by intensive introduction of energy. Said metal oxide powder may be partially destructed and converted into the nanometre (nm) range particles advantageous for the present invention by suitable grinding.

The preparation of pyrogenic zirconium dioxide is further described in EP 717008 A and WO 2009053232 A1.

The preparation of some pyrogenic mixed oxides comprising zirconium is further described in WO 2015173114 A1.

The pyrogenically, especially flame-hydrolytically produced zirconium dioxide powder and other mixed metal oxides comprising zirconium can be produced starting from zirconium halides, preferably the zirconium chloride as Zr precursor. ZrCl₄ and if applicable, other metal precursors, can be evaporated, the resulting vapor is mixed alone or together with a carrier gas, e.g. nitrogen, in a mixing unit in a burner with other gases; i.e. air, oxygen, nitrogen and hydrogen. The gases are caused to react with each other in a flame in a closed combustion chamber to produce the zirconium dioxide (or mixed zirconium oxides) and waste gases. Then the hot waste gases and the metal oxide are cooled off in a heat-exchanger unit, the waste gases are separated from the metal oxide and any halide remnants adhering to the metal oxide obtained are removed by a heat treatment with moistened air.

The flame spray pyrolysis (FSP) process suitable for preparing the zirconium dioxide or the mixed metal oxide comprising zirconium may comprise the following steps:
1) a solution containing a zirconium precursor is atomized, e.g. by means of air or an inert gas, preferably using a multi-substance nozzle, and
2) mixed with a combustion gas, preferably hydrogen and/or methane, and air and
3) the mixture is allowed to burn in a flame into a reaction chamber surrounded by a casing,
4) the hot gases and the solid products are cooled and then the solid product is removed from the gases.

The preferred Zr metal precursors used for producing the zirconium dioxide and the mixed oxides comprising zirconium by flame spray pyrolysis process are zirconium carboxylates, particularly zirconium carboxylates of aliphatic carboxylic acids having 6 to 9 carbon atoms, for example zirconium 2-ethylhexanoate.

The other metal precursors needed for producing the zirconium mixed metal oxides may be either inorganic, such as nitrates, chlorides or organic compounds, such as carboxylates.

The used metal oxide precursors may be atomized dissolved in water or an organic solvent. Suitable organic solvents include methanol, ethanol, n-propanol, isopropanol, n-butanol, tert-butanol, 2-propanone, 2-butanone, diethyl ether, tert-butyl methyl ether, tetrahydrofuran, C1-C8-carboxylic acids, ethyl acetate, toluene, petroleum and mixtures thereof.

Thus, the pyrogenically produced zirconium dioxide and the pyrogenically produced mixed oxide comprising zirconium used in the process according to the invention, are in the form of aggregated primary particles, preferably with a numerical mean diameter of primary particles of 5 - 100 nm, more preferably 10 - 90 nm, even more preferably 20 - 80 nm, as determined by transition electron microscopy (TEM). This numerical mean diameter can be determined by calculating the average size of at least 500 particles analysed by TEM.

The mean diameter of the aggregates of the pyrogenically produced zirconium dioxide and the pyrogenically produced mixed oxide comprising zirconium is usually about 10-1000 nm, the mean diameter of the agglomerates is usually 1-2 µm. These mean numerical values can be determined in a suitable dispersion, e.g. in an aqueous dispersion, by static light scattering (SLS) method. The agglomerates and partly the aggregates can be destroyed e.g. by grinding or ultrasonic treatment of the particles to result in particles with a smaller particle size.

Preferably, the mean particle diameter d₅₀ of the zirconium dioxide and/or the mixed oxide comprising zirconium is 10-150 nm, more preferably 20-130 nm, even more preferably 30-120 nm, as determined by static light scattering (SLS) after 60 s of ultrasonic treatment at 25 °C of a mixture consisting of 5 % by weight of the particles and 95 % by weight of a 0.5 g/L solution of sodium pyrophosphate in water.

Thus, the pyrogenically produced zirconium dioxide and the pyrogenically produced mixed oxide comprising zirconium used in the process of the present invention are preferably characterized by high dispersibility, that is, the ability to form relatively small particles under mild ultrasonic treatment. It is believed, that dispersion under such mild conditions correlates with the conditions during the dry coating process. That means, the agglomerates of the zirconium oxides are destroyed in the mixing process of the present invention in a similar way as under the ultrasonic treatment and are able to form homogeneous coating of the transition metal oxide.

The span (d₉₀-d₁₀)/d₅₀ of particles of the zirconium dioxide and/or of the mixed oxide comprising zirconium is preferably 0.4-1.2, more preferably 0.5-1.1, even more preferably 0.6-1.0, as determined by static light scattering (SLS) after 60 s of ultrasonic treatment at 25 °C of a mixture consisting of 5 % by weight of the particles and 95 % by weight of a 0.5 g/L solution of sodium pyrophosphate in water.

Thus, the pyrogenically produced zirconium dioxide and the pyrogenically produced mixed oxide comprising zirconium used in the process of the present invention are preferably characterized by a relatively narrow particle size distribution. This helps to achieve high-quality zirconium oxide coating on the surface of the transition metal oxide.

The d values d₁₀, d₅₀ and d₉₀ are commonly used for characterizing the cumulative particle diameter distribution of a given sample. For example, the d₁₀ diameter is the diameter at which 10% of a sample's volume is comprised of smaller than d₁₀ particles, the d₅₀ is the diameter at which 50% of a sample's volume is comprised of smaller than d₅₀ particles. The d₅₀ is also known as the "volume median diameter" as it divides the sample equally by volume; the d₉₀ is the diameter at which 90% of a sample's volume is comprised of smaller than d₉₀ particles.

The zirconium dioxide and the mixed oxide comprising zirconium are preferably hydrophilic in nature, that is these are not further treated by any hydrophobic reagents, such as silanes, after their synthesis by a pyrogenic process. The particles thus produced usually have a purity of at least 96 % by weight, preferably at least 98 % by weight, more preferably at least 99 % by weight. The metal oxides comprising zirconium may comprise hafnium compounds in the form of hafnium dioxide. The proportion of hafnium dioxide can be 1 to 4% by weight, based on ZrO₂. The zirconium dioxide and the mixed oxides comprising zirconium used in the inventive process preferably contain the elements Cd, Ce, Fe, Na, Nb, P, Ti, Zn in proportions of < 10 ppm and the elements Ba, Bi, Cr, K, Mn, Sb in proportions of < 5 ppm, where the sum of the proportions of all of these elements is < 100 ppm. The content of chloride is preferably less than 0.5% by weight, more preferably 0.01 to 0.3% by weight, based on the mass of the metal oxide powder. The proportion of carbon is preferably less than 0.2% by weight, more preferably 0.005%-0.2% by weight, even more preferably 0.01 % - 0.1% by weight, based on the mass of the metal oxide powder.

The mixed oxide comprising zirconium may further comprise lithium and optionally at least one of lanthanum and/or aluminium. The following mixed metal oxides comprising zirconium are particularly preferable: LiZrO₃, and the mixed oxides of general formula LiₓLa₃Zr₂M_{y}O_{8.5+0.5x+z},
wherein 6.5 ≤ x ≤ 8, preferably 7.0 ≤ x ≤ 7.5;
0 ≤ y ≤ 0.5, preferably 0 ≤ x ≤ 0.2 ;
z = 2y for M = Hf, Ga, Ge, Nb, Si, Sn, Sr, Ta and Ti;
z = 1.5y for M = Al, Sc, V and Y;
z = y for M = Ba, Ca, Mg and Zn,
most preferably Li₇La₃Zr₂O₁₂.

The term "transition metal" in the context of the present disclosure comprises the following elements:
Ti, V, Cr, Mn, Fe, Co, Ni, Cu, Zn, Nb, Mo, Ru, Rh, Pd, Ag, Cd, Ta, W, Re, Os, Ir, Pt, Au. Preferably, the transition metal is chosen from the group consisting of nickel, manganese, cobalt, and a mixture thereof.

The mixed lithium transition metal oxide used with preference in the process according to the disclosure is selected from the group consisting of lithium-cobalt oxide, lithium-manganese oxide, lithium-nickel-cobalt oxides, lithium-nickel-manganese-cobalt oxides, lithium-nickel-cobalt-aluminium oxides, lithium-nickel-manganese oxides, or a mixture thereof.

The mixed lithium transition metal oxide preferably has a general formula LiMO₂, wherein M is at least one transition metal selected from nickel, cobalt, manganese; more preferably M = Co or NiₓMn_{y}Co_{z}, wherein 0.3 ≤ x ≤ 0.9, 0 ≤ y ≤ 0.45, 0 ≤ z ≤ 0.4.

The mixed lithium transition metal oxide of the general formula LiMO₂ can be further doped with at least one other metal oxide, particularly with aluminium oxide and/or zirconium oxide.

The coated mixed lithium transition metal oxide preferably has a numerical mean particle diameter of 2-20 µm. A numerical mean particle diameter can be determined according to ISO 13320:2009 by laser diffraction particle size analysis.

The proportion of the zirconium dioxide and/or the mixed oxide comprising zirconium is preferably 0.05%-5% by weight, more preferably 0.1%-2% by weight, related to the total weight of the used mixture of the mixed lithium transition metal oxide and the zirconium dioxide and/or the mixed oxide comprising zirconium.

If the proportion of the zirconium dioxide and/or the mixed oxide comprising zirconium, is less than 0.05% by weight, no beneficial effect of the coating can usually be observed yet. In the case of more than 5% by weight thereof, no beneficial effect of the additional quantity of the zirconium coating of more than 5% by weight is usually observed.

The coated mixed lithium transition metal oxide preferably has a coating layer thickness of 10-200 nm, as determined by TEM analysis.

The invention further provides a coated mixed lithium transition metal oxide containing a pyrogenically produced zirconium dioxide and/or a pyrogenically produced mixed oxide comprising zirconium with the number average particle size d₅₀ of 10 nm - 150 nm, preferably 20 nm - 130 nm, more preferably 30 nm - 120 nm on the surface of the mixed lithium transition metal oxide. The number average particle size d₅₀ of the pyrogenically produced zirconium dioxide and/or the pyrogenically produced mixed oxide comprising zirconium in the coated mixed lithium transition metal oxide can be measured by transition electronic microscopy (TEM) analysis and corresponds to the mean particle size d₅₀ value for the pyrogenically produced zirconium dioxide and/or the pyrogenically produced mixed oxide comprising zirconium used in the inventive process, which can be determined by static light scattering (SLS) after 60 s of ultrasonic treatment at 25 °C of a mixture consisting of 5 % by weight of the particles and 95 % by weight of a 0.5 g/L solution of sodium pyrophosphate in water.

The coated mixed lithium transition metal oxide is preferably obtainable by the process according to the disclosure

The further preferred features of the coated mixed lithium transition metal oxide, of the pyrogenically produced zirconium dioxide and/or the pyrogenically produced mixed oxide comprising zirconium described above in the preferred embodiments of the process according to the present disclosure are also the preferred features of the coated mixed lithium transition metal oxide, the pyrogenically produced zirconium dioxide and/or the pyrogenically produced mixed oxide comprising zirconium, respectively, in respect to the coated mixed lithium transition metal oxide according to the present disclosure independent on whether it is produced by the inventive process or not.

The disclosure further provides an active positive electrode material for a lithium battery comprising the coated mixed lithium transition metal oxide according to the disclosure or the coated mixed lithium transition metal oxide obtainable by the process according to the disclosure.

The positive electrode, cathode, of the lithium battery usually includes a current collector and an active cathode material layer formed on the current collector.

The current collector may be an aluminium foil, copper foil, a nickel foil, a stainless-steel foil, a titanium foil, a polymer substrate coated with a conductive metal, or a combination thereof.

The active positive electrode materials may include materials capable of reversible intercalating/deintercalating lithium ions and are well known in the art. Such active cathode material may include transition metal oxides, such as mixed oxides comprising Ni, Co, Mn, V or other transition metals and optionally lithium. Especially preferably are the mixed lithium transition metal oxides comprising nickel, manganese and cobalt (NMC).

The disclosure also provides a lithium battery comprising the coated mixed lithium transition metal oxide or the coated mixed lithium transition metal oxide obtainable by the process according to the disclosure.

The lithium battery of the disclosure apart from the cathode, may contain an anode, optionally a separator and an electrolyte comprising a lithium salt or a lithium compound.

The anode of the lithium battery may comprise any suitable material, commonly used in the secondary lithium batteries, capable of reversible intercalating/deintercalating lithium ions. Typical examples thereof are carbonaceous materials including crystalline carbon such as natural or artificial graphite in the form of plate-like, flake, spherical or fibrous type graphite; amorphous carbon, such as soft carbon, hard carbon, mesophase pitch carbide, fired coke and the like, or mixtures thereof. In addition, lithium metal or conversion materials (e.g. Si or Sn) can be used as anode active materials.

The electrolyte of the lithium battery can be in the liquid, gel or solid form.

The liquid electrolyte of the lithium battery may comprise any suitable organic solvent commonly used in the lithium batteries, such as anhydrous ethylene carbonate (EC), dimethyl carbonate (DMC), propylene carbonate, methylethyl carbonate, diethyl carbonate, gamma butyrolactone, dimethoxyethane, fluoroethylene carbonate, vinylethylene carbonate, or a mixture thereof.

The gel electrolytes include gelled polymers.

The solid electrolyte of the lithium battery may comprise oxides, e.g. lithium metal oxides, sulfides, phosphates, or solid polymers.

The electrolyte of the lithium battery can contain a lithium salt. Examples of such lithium salts include lithium hexafluorophosphate (LiPF₆), lithium bis 2-(trifluoromethylsulfonyl)imide (LiTFSI), lithium perchlorate (LiClO₄), lithium tetrafluoroborate (LiBF₄), Li₂SiF₆, lithium triflate, LiN(SO₂CF₂CF₃)₂ and mixtures thereof.

The invention further provides use of the coated mixed lithium transition metal oxide according to Claims 12 or 13 in an active positive electrode material of a lithium battery.

### Examples

### Starting materials

Fumed ZrO₂ with a specific surface area (BET) of 40-60 m²/g, was produced by flame spray pyrolysis according to Example 1 of WO 2009053232 A1.

Commercial "nano ZrO₂" powder (particle size 20-30 nm) with BET surface area of ≥35 m²/g, was supplied by ChemPUR Feinchemikalien und Forschungsbedarf GmbH

Commercial mixed lithium nickel manganese cobalt oxide powder NMC (7-1.5-1.5) (Type PLB-H7) with a BET surface area of 0.30-0.60 m²/g, a medium particle diameter d₅₀ = 10.6 ± 2 µm (determined by static laser scattering method), was supplied by Linyi Gelon LIB Co.

### Particle size distribution of different ZrO₂ types

The samples of a fumed ZrO₂ or a commercial "nano ZrO₂" powder (5 wt %) were dispersed in the solution of sodium pyrophosphate (0.5 g/L) in distilled water and treated at 25 °C for 1 minute in an external ultrasonic bath (160W).

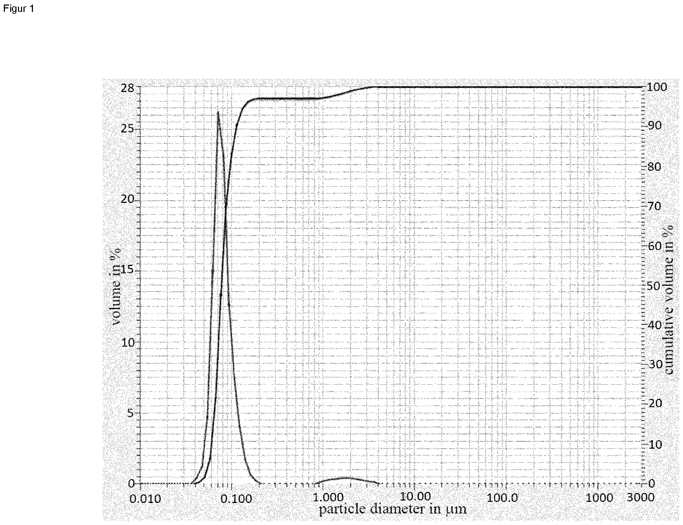

Figure 1 shows the particle size distribution of the fumed ZrO₂ and Figure 2 shows the particle size distribution of the "nano ZrO₂", analyzed by static laser diffraction method (SLS) using laser diffraction particle size analyzer (HORIBA LA-950). For fumed ZrO₂, a mono-modally and very narrow particle size distribution was detected (d₁₀=0.06014µm, d₅₀=0.07751µm, d₉₀=0.11406µm, span = (d₉₀-d₁₀)/d₅₀ = 0.7), while a wide spread bimodal distribution was detected for "nano ZrO₂" of ChemPUR, showing large non-dispersed particles (d₁₀= 0.10769 µm, d₅₀ = 3.16297 µm, d₉₀ = 5.80804 µm, span = (d₉₀-d₁₀)/d₅₀ = 1.8).

### Example 1

The NMC-powder (217,8 g) was mixed with 2,2 g (1.0 wt%) of the fumed ZrO₂-powder in a high intensity laboratory mixer (Somakon mixer MP-GL with a 0.5 L mixing unit) at first for 1 min at 500 rpm (specific electrical power: 350W/kg NMC) to homogeneously mix the two powders. Afterwards the mixing intensity was increased to 2000 rpm (specific electrical power: 800W/kg NMC, tip-speed of the mixing tool in the mixing unit: 10 m/s) and the mixing was continued for 5 min to achieve the dry coating of the NMC particles by ZrO₂.

The coated NMC particles showed a ZrO₂-coating layer thickness of 10-200 nm, as determined by TEM analysis.

### Comparative Example 1

The procedure of Example 1 was repeated exactly with the only difference, that "nano ZrO₂" powder was used instead of fumed ZrO₂.

### Analysis of ZrO₂-coated mixed lithium transition metal oxides by SEM-EDX

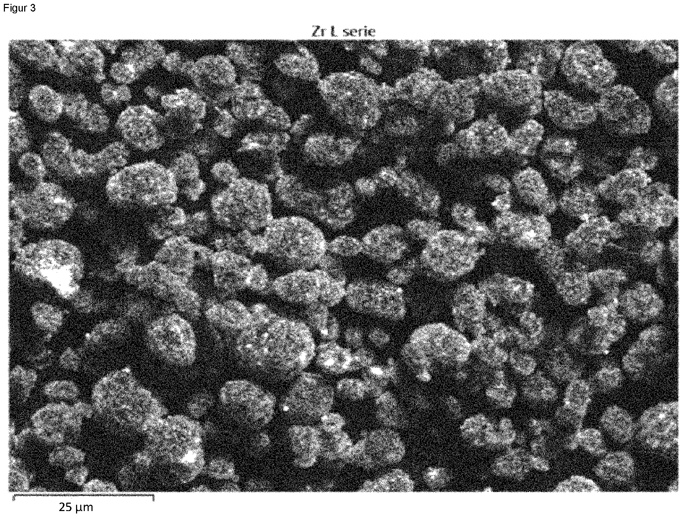

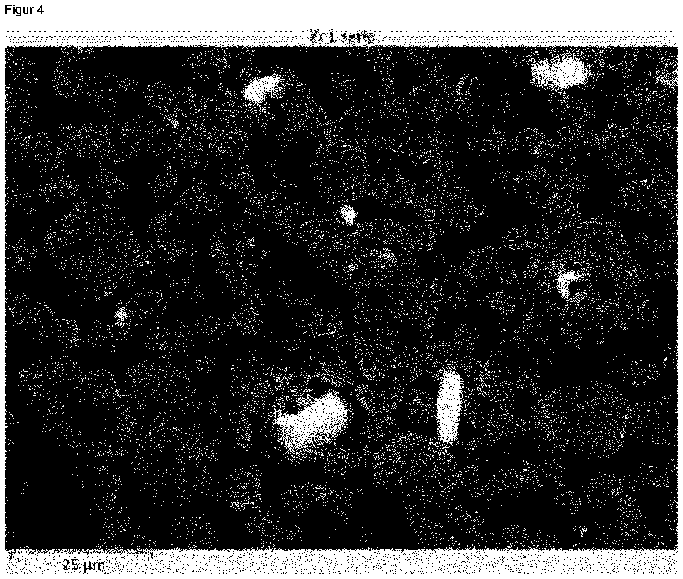

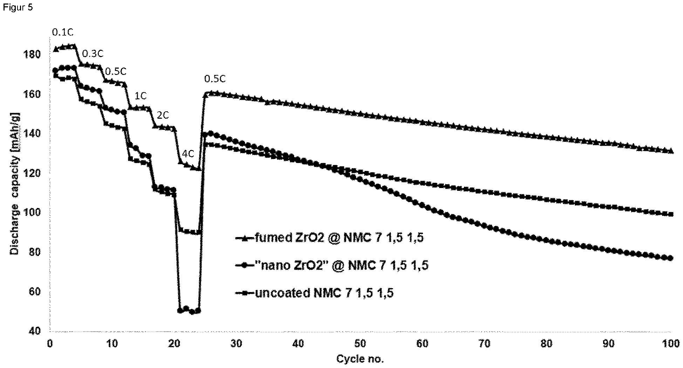

Figure 3 shows the SEM-EDX mapping of Zr (white) on ZrO₂-coated NMC prepared by using fumed ZrO₂ (Example 1), Figure 4 shows the results of the analysis of NMC coated with "nano ZrO₂" (Comparative Example 1). The axes of Figures 3 and 4 show: x axis = diameter of particles; the left y axis = volume in %, the right y axis = cumulative volume in %. NMC mixed oxide dry coated with fumed ZrO₂, shows a full and homogeneous coverage of all NMC particles with ZrO₂. No larger ZrO₂ agglomerates were detected, showing a good dispersibility of nanostructured fumed ZrO₂. Additionally, no free unattached ZrO₂-particles next to the NMC particles were found, indicating the strong adhesion between coating and the substrate (NMC). In contrast, Figure 5 shows that only the fine ZrO₂-particles of "nano ZrO₂" are attached to the surface of NMC particles. The larger ZrO₂-particles are non-dispersed and are therefore unattached, located next to the NMC particles. As a result, the NMC particles are not fully covered by zirconium oxide.

### Preparation of electrodes

Electrodes for electrochemical measurements were prepared by blending 90 wt% NMC with 5 wt% of a polyvinylidene fluoride binder (PVDF 5130, manufacturer: Solef) and 5 wt% of a conductive carbon black (SUPER PLi, manufacturer: TIMCAL) under inert gas atmosphere. N-Methyl-2-pyrrolidone (NMP) was used as a solvent. The slurry was casted on aluminum foil and dried at 120 °C for 20 min on a heating plate under air. Afterwards, the electrode sheet was dried in a vacuum furnace at 120 °C for 2 h. Circular electrodes with a diameter of 12 mm were punched out of a larger piece and then flattened between 2 rollers with a pressure of 90 psi, and dried again in a vacuum furnace at 120 °C for 12 h to remove any residual water and NMP.

### Assembly of lithium batteries

The lithium battery cells for the cycling tests were assembled as CR2032 type coin cells (MTI Corporation) in an argon-filled glovebox (GLOVEBOX SYSTEMTECHNIK GmbH). Lithium metal (ROCKWOOD LITHIUM GmbH) was used as the anode material. Celgard 2500 was used as the separator. 25 µL of a 1 M solution of LiPF₆ in ethylene carbonate and ethyl methyl carbonate (50:50 wt/wt; SIGMA-ALDRICH) was used as an electrolyte. The cells were locked with a crimper (MTI).

### Galvanostatic cycling tests

Galvanostatic cycle performance of the assembled lithium batteries was measured at 25 °C using a MACCOR battery cycler at cut-off voltage of 3.0-4.3 V. The C-rate (charge/discharge) was increased every four cycles, starting from 0.1C/0.1C (Charge/Discharge) to 0.3 C/0.3 C, 0.5 C/0.5 C, 1.0 C/1.0 C, 1.0 C/2.0 C and 1.0 C/4.0 C. Afterwards, the cell was cycled at 0.5 C/0.5 C for long term stability test. (0.5 C rate corresponds to current density of 0.7 mAh/cm²). For the calculation of the capacities and the specific currents, only the mass of the active material was considered. The results are presented in Figure 5. The axes of Figure 5 show: x axis = number of cycles; y axis = discharge capacity in mAh/g.

In Figure 5, the cycling performance of NMC coated with fumed ZrO₂ (line with triangles) is compared with the NMC coated with "nano ZrO₂" (line with circles) and as a reference with the uncoated NMC (line with squares). It is clear from the results, that the fumed ZrO₂ coating improves the stability and cycle life of NMC significantly. The NMC coated with fumed ZrO₂ shows comparing with the other tested materials the highest discharge capacity over all cycles, both in the rate test at the beginning and in the long-term cycling test. It is remarkable that it also shows the higher initial specific discharge capacities at 0.1 C than the other samples. The cell with NMC coated with "nano ZrO₂" shows a significantly worse cycling performance. For this material, the rate performance at a discharge rate of 4C and the capacity retention in the long-term cycling test is even worse than the results for the uncoated NMC.

## Claims

1. Process for producing a coated mixed lithium transition metal oxide, **characterized in that**
a mixed lithium transition metal oxide and a pyrogenically produced zirconium dioxide and/or a pyrogenically produced mixed oxide comprising zirconium are subjected to dry mixing by means of an electric mixing unit in the form of intensive mixers with high-speed mixing tools having a specific electrical power of 0.05-1.5 kW per kg of the mixed lithium transition metal oxide.

2. Process according to Claim 1, **characterized in that**
the specific electrical power of the mixing unit is 0.1-1000 kW.

3. Process according to Claim 1 or 2, **characterized in that**
the volume of the mixing unit used is 0.1 L to 2.5 m³.

4. Process according to Claims 1 to 3, **characterized in that**
the speed of the mixing tool in the mixing unit is 5-30 m/s.

5. Process according to Claims 1 to 4, **characterized in that**
the BET surface area of the zirconium dioxide and/or the mixed oxide comprising zirconium used for producing the coated mixed lithium transition metal oxide, is 5-200 m²/g.

6. Process according to Claims 1 to 5, **characterized in that**
the zirconium dioxide and the mixed oxide comprising zirconium used for producing the coated mixed lithium transition metal oxide, are in the form of aggregated primary particles with a numerical mean diameter of primary particles of 5-100 nm, as determined by transition electron microscopy (TEM).

7. Process according to Claims 1 to 6, **characterized in that**
the mean particle diameter d₅₀ of particles of the zirconium dioxide and/or the mixed oxide comprising zirconium used for producing the coated mixed lithium transition metal oxide, is 10-150 nm, as determined by static light scattering (SLS) after 60 s of ultrasonic treatment at 25 °C of a mixture consisting of 5 % by weight of the particles and 95 % by weight of a 0.5 g/L solution of sodium pyrophosphate in water.

8. Process according to Claims 1 to 7, **characterized in that**
the span (d₉₀-d₁₀)/d₅₀ of particles of the zirconium dioxide and/or of the mixed oxide comprising zirconium used for producing the coated mixed lithium transition metal oxide, is 0.4-1.2, as determined by static light scattering (SLS) after 60 s of ultrasonic treatment at 25 °C of a mixture consisting of 5 % by weight of the particles and 95 % by weight of a 0.5 g/L solution of sodium pyrophosphate in water.

9. Process according to Claims 1 to 8, **characterized in that**
the mixed oxide comprising zirconium further comprises lithium and optionally at least one of lanthanum and/or aluminium.

10. Process according to Claims 1 to 9, **characterized in that**
the mixed lithium transition metal oxide is selected from the group consisting of lithium-cobalt oxide, lithium-manganese oxide, lithium-nickel-cobalt oxides, lithium-nickel-manganese-cobalt oxides, lithium-nickel-cobalt-aluminium oxides, lithium-nickel-manganese oxides, or a mixture thereof.

11. Process according to Claims 1 to 10, **characterized in that**
the proportion of the zirconium dioxide and/or the mixed oxide comprising zirconium is 0.05%-5% by weight, related to the total weight of the used mixture of the mixed lithium transition metal oxide and the zirconium dioxide and/or the mixed oxide comprising zirconium.

12. Active positive electrode material for a lithium battery comprising a coated mixed lithium transition metal oxide containing a pyrogenically produced zirconium dioxide and/or a pyrogenically produced mixed oxide comprising zirconium with a number average particle size d₅₀, measured by transition electronic microscopy (TEM) analysis, of 10 nm - 150 nm on the surface of the mixed lithium transition metal.

13. Lithium battery comprising a coated mixed lithium transition metal oxide containing a pyrogenically produced zirconium dioxide and/or a pyrogenically produced mixed oxide comprising zirconium with a number average particle size d₅₀, measured by transition electronic microscopy (TEM) analysis, of 10 nm - 150 nm on the surface of the mixed lithium transition metal.

## Patentansprüche

1. Verfahren zur Herstellung eines beschichteten Lithium-Übergangsmetall-Mischoxids, **dadurch gekennzeichnet, dass**
ein Lithium-Übergangsmetall-Mischoxid und ein pyrogen hergestelltes Zirconiumdioxid und/oder ein pyrogen hergestelltes zirconiumhaltiges Mischoxid mit Hilfe eines elektrischen Mischaggregats in Form von Intensivmischern mit schnell laufenden Mischwerkzeugen mit einer spezifischen elektrischen Leistung von 0,05-1,5 kW pro kg des Lithium-Übergangsmetall-Mischoxids, trocken gemischt werden.

2. Verfahren nach Anspruch 1, **dadurch gekennzeichnet, dass**
die spezifische elektrische Leistung des Mischaggregats 0,1-1000 kW beträgt.

3. Verfahren nach Anspruch 1 oder 2, **dadurch gekennzeichnet, dass**
das Volumen des verwendeten Mischaggregats 0,1 1 bis 2,5 m³ beträgt.

4. Verfahren nach einem der Ansprüche 1 bis 3, **dadurch gekennzeichnet, dass**
die Geschwindigkeit des Mischwerkzeugs in dem Mischaggregat 5-30 m/s beträgt.

5. Verfahren nach einem der Ansprüche 1 bis 4, **dadurch gekennzeichnet, dass**
die BET-Oberfläche des Zirconiumdioxids und/oder des zirconiumhaltigen Mischoxids, das für die Herstellung des beschichteten Lithium-Übergangsmetall-Mischoxids verwendet wird, 5-200 m²/g beträgt.

6. Verfahren nach einem der Ansprüche 1 bis 5, **dadurch gekennzeichnet, dass**
das Zirconiumdioxid und das zirconiumhaltige Mischoxid, das zur Herstellung des beschichteten Lithium-Übergangsmetall-Mischoxids verwendet wird, in Form aggregierter Primärpartikel mit einem numerischen mittleren Durchmesser von Primärpartikeln von 5-100 nm gemäß Bestimmung durch TEM (Transition Electron Microscopy) vorliegen.

7. Verfahren nach einem der Ansprüche 1 bis 6, **dadurch gekennzeichnet, dass**
der mittlere Teilchendurchmesser d₅₀ von zur Herstellung des beschichteten Lithium-Übergangsmetall-Mischoxids verwendeten Partikeln des Zirconiumdioxids und/oder des zirconiumhaltigen Mischoxids, das zur Herstellung des beschichteten Lithium-Übergangsmetall-Mischoxids verwendet wird, gemäß Bestimmung durch statische Lichtstreuung (SLS) einer Mischung bestehend aus 5 Gew.-% der Partikel und 95 Gew.-% einer 0,5 g/l Lösung von Natriumpyrophosphat in Wasser nach 60 s Ultraschallbehandlung bei 25 °C 10-150 nm beträgt.

8. Verfahren nach einem der Ansprüche 1 bis 7, **dadurch gekennzeichnet, dass**
die Spanne (d₉₀-d₁₀)/d₅₀ von zur Herstellung des beschichteten Lithium-Übergangsmetall-Mischoxids verwendeten Partikeln des Zirconiumdioxids und/oder des zirconiumhaltigen Mischoxids, das zur Herstellung des beschichteten Lithium-Übergangsmetall-Mischoxids verwendet wird, gemäß Bestimmung durch statische Lichtstreuung (SLS) einer Mischung bestehend aus 5 Gew.-% der Partikel und 95 Gew.-% einer 0,5 g/l Lösung von Natriumpyrophosphat in Wasser nach 60 s Ultraschallbehandlung bei 25 °C 0,4-1,2 beträgt.

9. Verfahren nach einem der Ansprüche 1 bis 8, **dadurch gekennzeichnet, dass**
das zirconiumhaltige Mischoxid ferner Lithium und gegebenenfalls mindestens eines von Lanthan und/oder Aluminium umfasst.

10. Verfahren nach einem der Ansprüche 1 bis 9, **dadurch gekennzeichnet, dass**
das Lithium-Übergangsmetall-Mischoxid aus der Gruppe bestehend aus Lithium-Cobalt-Oxid, Lithium-Mangan-Oxid, Lithium-Nickel-Cobalt-Oxiden, Lithium-Nickel-Mangan-Cobalt-Oxiden, Lithium-Nickel-Cobalt-Aluminium-Oxiden, Lithium-Nickel-Mangan-Oxiden oder einer Mischung davon ausgewählt wird.

11. Verfahren nach einem der Ansprüche 1 bis 10, **dadurch gekennzeichnet, dass**
der Anteil des Zirconiumdioxids und/oder des zirconiumhaltigen Mischoxids 0,05-5 Gew.-%, bezogen auf das Gesamtgewicht der verwendeten Mischung des Lithium-Übergangsmetall-Mischoxids und des Zirconiumdioxids und/oder des zirconiumhaltigen Mischoxids, beträgt.

12. Aktivmaterial für positive Elektroden für eine Lithiumbatterie, umfassend ein beschichtetes Lithium-Übergangsmetall-Mischoxid, das ein pyrogen hergestelltes Zirconiumdioxid und/oder ein pyrogen hergestelltes zirconiumhaltiges Mischoxid mit einer zahlenmittleren Teilchengröße d₅₀, gemessen mittels TEM(Transition Electronic Microscopy)-Analyse, von 10 nm - 150 nm auf der Oberfläche des gemischten Lithium-Übergangsmetalls enthält.

13. Lithiumbatterie, umfassend ein beschichtetes Lithium-Übergangsmetall-Mischoxid, das ein pyrogen hergestelltes Zirconiumdioxid und/oder ein pyrogen hergestelltes zirconiumhaltiges Mischoxid mit einer zahlenmittleren Teilchengröße d₅₀, gemessen mittels TEM(Transition Electronic Microscopy)-Analyse, von 10 nm - 150 nm auf der Oberfläche des gemischten Lithium-Übergangsmetalls enthält.

## Revendications

1. Procédé de production d'un oxyde mixte de lithium et de métal de transition revêtu, **caractérisé en ce que** un oxyde mixte de lithium et de métal de transition et un dioxyde de zirconium produit de manière pyrogénique et/ou un oxyde mixte contenant du zirconium produit de manière pyrogénique sont soumis à un mélange à sec au moyen d'une unité de mélange électrique se présentant sous la forme de mélangeurs intensifs comportant des outils de mélange à grande vitesse ayant une puissance électrique spécifique de 0,05 à 1,5 kW par kg d'oxyde mixte de lithium et de métal de transition.

2. Procédé selon la revendication 1, **caractérisé en ce que**
la puissance électrique spécifique du mélangeur est de 0.1-1 000 kW.

3. Procédé selon la revendication 1 ou 2, **caractérisé en ce que**
le volume de l'unité de mélange utilisée est de 0,1 L à 2, 5 m³.

4. Procédé selon les revendications 1 à 3, **caractérisé en ce que**
la vitesse de l'outil de mélange dans l'unité de mélange est de 5-30 m/s.

5. Procédé selon les revendications 1 à 4, **caractérisé en ce que**
la surface BET du dioxyde de zirconium et/ou de l'oxyde mixte comprenant du zirconium utilisé pour la fabrication de l'oxyde mixte de métal de transition et de lithium revêtu est de 5 à 200 m²/g.

6. Procédé selon les revendications 1 à 5, **caractérisé en ce que**
le dioxyde de zirconium et l'oxyde mixte comprenant du zirconium utilisé pour produire l'oxyde mixte de métal de transition et de lithium revêtu sont sous la forme de particules primaires agrégées ayant un diamètre moyen numérique de particules primaires de 5 à 100 nm, tel que déterminé par microscopie électronique de transition (TEM) .

7. Procédé selon les revendications 1 à 6, **caractérisé en ce que**
le diamètre moyen de particule d₅₀ des particules du dioxyde de zirconium et/ou de l'oxyde mixte contenant du zirconium utilisées pour la production de l'oxyde mixte de métal de transition et de lithium revêtu, est de 10 à 150 nm, comme déterminé par diffusion de lumière statique (SLS) après 60 s de traitement par ultrasons à 25 °C d'un mélange constitué de 5 % en poids des particules et de 95 % en poids d'une solution à 0,5 g/L de pyrophosphate de sodium dans l'eau.

8. Procédé selon les revendications 1 à 7, **caractérisé en ce que**
l'étendue (d₉₀-d₁₀)/d₅₀ des particules du dioxyde de zirconium et/ou de l'oxyde mixte comprenant du zirconium utilisé pour produire l'oxyde mixte de métal de transition et de lithium revêtu, est 0,4 à 1,2, comme déterminée par diffusion de lumière statique (SLS) après 60 s de traitement par ultrasons à 25 °C d'un mélange constitué de 5 % en poids des particules et de 95 % en poids d'une solution à 0,5 g/L de pyrophosphate de sodium dans l'eau.

9. Procédé selon les revendications 1 à 8, **caractérisé en ce que**
l'oxyde mixte comprenant du zirconium comprend en outre du lithium et éventuellement au moins l'un parmi le lanthane et/ou l'aluminium.

10. Procédé selon les revendications 1 à 9, **caractérisé en ce que**
l'oxyde mixte de métal de transition et de lithium est choisi dans le groupe constitué par l'oxyde de lithium-cobalt, l'oxyde de lithium-manganèse, les oxydes de lithium-nickel-cobalt, les oxydes de lithium-nickel-manganèse-cobalt, les oxydes de lithium-nickel-cobalt-aluminium, les oxydes de lithium-nickel-manganèse ou un mélange de ceux-ci.

11. Procédé selon les revendications 1 à 10, **caractérisé en ce que**
la proportion du dioxyde de zirconium et/ou de l'oxyde mixte contenant du zirconium est de 0,05 % à 5 % en poids, par rapport au poids total du mélange de l'oxyde mixte de métal de transition et de lithium utilisé et du dioxyde de zirconium et/ou de l'oxyde mixte comprenant du zirconium.

12. Matériau actif d'électrode positive pour une batterie au lithium comprenant un oxyde mixte de métal de transition et de lithium revêtu contenant un dioxyde de zirconium produit pyrogéniquement et/ou un oxyde mixte produit pyrogéniquement comprenant du zirconium ayant une granulométrie moyenne en nombre d₅₀, mesurée par analyse par microscopie électronique de transition (TEM), de 10 nm à 150 nm sur la surface du métal de transition lithium mixte.

13. Batterie au lithium comprenant un oxyde mixte de métal de transition et de lithium revêtu, contenant un dioxyde de zirconium produit pyrogéniquement et/ou un oxyde mixte produit pyrogéniquement comprenant du zirconium ayant une granulométrie moyenne en nombre d₅₀, mesurée par analyse par microscopie électronique de transition (TEM), de 10 nm à 150 nm sur la surface du métal de transition lithium mixte.
